# DEMANDE DE BREVET EUROPEEN

(11) **EP 0 585 172 A1**
(43) Date de publication de la demande: **02.03.1994**
(21) Numéro de dépôt: 93402080.1
(22) Date de dépôt: 20.08.1993
(51) Int. Cl.: G01T 1/00, A61B 6/03, G03B 42/02, G01T 1/20

(54) **Procédé d'acquisition d'images par rayons X et agencement pour la mise en oeuvre de ce procédé**

(30) Priorité: 26.08.1992 FR 9210292
(71) Demandeur: Stoichita, Catalin, F-94210 La Varenne (FR)
(72) Inventeur: Stoichita, Catalin, F-94210 La Varenne (FR)

(57) **Abrégé**

L'invention concerne un procédé d'acquisition d'images par rayons X.

Ce procédé est du type selon lequel on expose l'objet à visualiser à des rayons X et produit à partir de ces rayons, à l'aide d'un écran scintillateur (1) et d'un dispositif à transfert de charges (2) des signaux électriques représentatifs de l'objet (9). Le procédé est caractérisé en ce que l'on utilise un écran scintillateur (1) à forte rémanence, l'on place l'écran scintillateur (1) sur la surface sensible à la lumière du dispositif à transfert de charges (2) et amène ce dernier à acquérir l'image visible du scintillateur par intégration pendant la phase de post-luminescence du scintillateur.

L'invention est utilisable par l'imagerie médicale.

## Description

L'invention concerne un procédé d'acquisition d'images par rayons X, selon lequel on expose l'objet à visualiser à des rayons X et produit à partir de ces rayons, à l'aide d'un écran scintillateur et d'un dispositif à transfert de charge, des signaux électriques représentatifs de l'objet et un agencement d'acquisition pour la mise en oeuvre de ce procédé.

Des procédés et agencements d'acquisition d'image de ce type sont déjà connus. En effet, lors de l'apparition de capteurs d'image sous forme de dispositifs à transfert de charge appelé ci-après dispositifs CCD, il est possible de construire des caméras photo et télévision de petites dimensions qui sont très sensibles et utilisables dans de nombreux domaines. Ces dispositifs ne remplacement pas seulement les anciens tubes à vide comme capteurs d'images mais ils imposent en même temps une structure numérique aux chaînes d'images qui les utilisent. Dans les applications d'images à l'aide de rayons X, ont été signalés comme problèmes : la taille trop petite des capteurs par rapport à la taille des radiographies à prendre, la résolution moins bonne que le film classique et l'effet destructif de la radiation sur la structure des éléments semi-conducteurs.

En regardant les solutions proposées dans les brevets (EP-A-0 129 451, FR-A-2 333 404, EP-A-0 285 214, EP-A-0 372 122, EP-A-0 373 717, EP-A-0 149 502, EP-A-0 279 294), on constate que pour résoudre le problème de la taille, on fait appel à des systèmes optiques qui transposent l'image en provenance du scintillateur sur la surface du dispositif CCD en la réduisant convenablement. Pour résoudre le problème du bombardement par les rayons X, on se base sur la disposition du dispositif CCD de façon à réduire la partie exposée en allant jusqu'à déporter le dispositif CCD au bout d'un guide optique à l'extérieur de la zone considérée dangereuse ou on utilise des écrans transparents à la lumière et suffisamment absorbants de rayons X. Les désavantages sont évidents : le prix de l'optique, les distorsions géométriques, la baisse de sensibilité et de résolution, la non-uniformité d'éclairage et notamment le gabarit qui peut être jugé inadmissible dans certaines applications. Dans le domaine des capteurs d'images par rayons X à usage intra-bucal, par exemple, le meilleur compromis, jusqu'à maintenant, semble être l'utilisation comme système optique, d'une fibre optique réductrice dopée, tronco-pyramidale qui fait à la fois office de réducteur d'image et d'écran contre la radiation non voulue.

L'invention a pour but de proposer un procédé et un agencement d'acquisition d'image, du type indiqué plus haut, qui ne présentent pas les inconvénients susmentionnés de l'état de la technique.

Pour atteindre ce but, le procédé selon l'invention est caractérisé en ce que l'on utilise un écran scintillateur ayant une rémanence importante, l'on place l'écran scintillateur sur la surface sensible à la lumière du dispositif à transfert de charge et amène le dispositif à transfert de charges à acquérir l'image pendant la phase de post-luminescence du scintillateur.

Selon une autre caractéristique de l'invention, on utilise une source émettrice de rayons X dont l'énergie est suffisamment élevée pour que le dispositif à transfert de charges fonctionne avec un coefficient d'absorption des photons X relativement faible, dans le but d'éviter la détérioration de ce dispositif.

Selon une autre caractéristique avantageuse de l'invention, on maintient le champ électrique dans le dispositif à transfert de charges pendant la phase de radiation à une valeur minimale.

Selon encore une autre caractéristique avantageuse de l'invention, la phase d'effacement du dispositif à transfert de charges, qui précède la phase d'intégration, est effectuée très rapidement.

Selon encore une autre caractéristique avantageuse de l'invention, on élimine l'effet des images résiduelles sur le dispositif à transfert de charges par soustraction de l'image acquise d'une image résiduelle ayant été avantageusement établie juste avant chaque prise de radiographie avec le dispositif à transfert de charges non exposé aux rayons X.

L'agencement d'acquisition d'images pour la mise en oeuvre du procédé selon l'invention est caractérisé en ce que l'écran scintillateur est un écran scintillateur à forte rémanence et monté sur la face sensible du dispositif à transfert de charge et en ce que le dispositif de commande de ce dernier est adapté pour que l'intégration de l'image sur le dispositif à transfert de charge soit effectuée pendant la phase de post-luminescence de l'écran scintillateur.

Une première caractéristique essentielle de l'invention est donc qu'elle implique l'utilisation d'un scintillateur à forte rémanence qui est posé (plaqué) directement sur la surface sensible à la lumière du dispositif CCD. En éliminant toute optique intermédiaire entre le scintillateur et le dispositif CCD, on élimine toutes distorsions géométriques (le dispositif CCD lui-même peut être considéré comme parfait de ce point de vue). De même, on élimine toute perte ou diffusion de lumière entre la conversion des rayons X dans le scintillateur et l'absorption dans le dispositif CCD, ce qui améliore la sensibilité et la résolution. De même, on élimine toute non-uniformité d'éclairage zonale ou ponctuelle (introduites particulièrement par les fibres optiques). Le gabarit peut être considéré comme étant minimal.

La destruction du dispositif CCD sous le bombardement des rayons X est déterminée par l'absorption des photons X dans le silicium. Celle-ci est déterminée par une caractéristique spectrale qui a un coefficient approximatif de 5/cm pour les photons d'une énergie de 74.4 KeV, de 50/cm pour les photons d'une énergie de 12.4 KeV et de 10000/cm pour ceux de 5 KeV.

Par conséquent, une deuxième caractéristique essentielle de l'invention réside dans l'utilisation d'une source de rayons X qui n'émet pas des radiations de basse énergie. On constate que cette disposition satisfait bien aux normes de radioprotection biologique dans le cas de la radiologie médicale.

L'absorption d'un photon X par un électron se traduit dans un premier temps par l'éjection de celui-ci de son niveau énergétique profond dans la bande de conduction, où il possède une énergie cinétique importante. Son énergie est transférée par collision aux autres électrons de la bande de valence en générant des paires électron-trou et ensuite au réseau cristallin. Le réseau reçoit cette énergie sous la forme de chaleur, modification de liaisons cristallines (ce qui signifie l'apparition de centres de génération de recombinaisons semblables quant à l'effet à des impuretés de dopage) ou, dans certaines conditions, encore plus destructives de transport de masse. En présence d'un champ électrique, les porteurs de charge ainsi produits sont accélérés et peuvent engendrer par collision d'autres porteurs de charge, en se multipliant. Le phénomène est caractérisé par un facteur dit de multiplication qui dépend particulièrement de la valeur du champ électrique appliqué. On transfère ainsi de l'énergie de la source du champ appliqué vers le réseau. Pour certaines valeurs du champ appliqué, le facteur de multiplication atteint la valeur infinie et dans ce cas, il y a une multiplication en avalanche, phénomène qui est souvent destructif.

La troisième caractéristique de ce procédé réside dans la réduction de ces effets de la radiation. A cette fin, on polarise le dispositif CCD pendant l'exposition aux rayons X, de façon à minimiser le champ électrique dans sa structure.

Habituellement, pour une prise de vue, les dispositifs CCD passent par trois étapes différentes en fonction des tensions appliquées à leurs électrodes : effacement, intégration et lecture. Dans les appareils connus, l'exposition aux rayons X coïncide avec la période d'intégration quand le CCD est assez polarisé.

Le présent procédé se caractérise par un décalage entre le cycle électrique d'acquisition d'image et l'exposition aux rayons X. Pendant l'exposition, l'image est mémorisée sur le scintillateur, le CCD se trouvant dans la condition de champ électrique minimal. Tout de suite après l'exposition, le dispositif CCD est polarisé régulièrement pour passer par les trois étapes : effacement très rapide, intégration pour recevoir la quantité de lumière (l'image) dégagée par le scintillateur en cours de relaxation et la lecture. Pour réduire au minimum le temps d'initialisation après la mise sous tension, le dispositif CCD peut être pourvu de moyens spéciaux, pour un effacement rapide.

Selon une quatrième caractéristique de l'invention, un cycle d'acquisition d'image par rayons X est constitué de quatre phases de fonctionnement de dispositif CCD : champ électrique minimal, effacement rapide, intégration, lecture.

Le temps de relaxation du scintillateur doit être suffisamment long pour pouvoir négliger les pertes de lumière pendant l'effacement du CCD. Le temps de relaxation du scintillateur doit être suffisamment court pour pouvoir intégrer toute la quantité de lumière sans que se mette en évidence le bruit propre au CCD. La saturation du scintillateur doit être suffisante pour rendre un bon niveau de signal (voir la saturation) à la sortie du dispositif CCD.

Selon une autre caractéristique essentielle de l'invention, l'intégration de l'image sur le dispositif CCD est effectuée pendant la phase de post-luminescence du scintillateur qui est excité par les rayons X.

Malgré la réduction du champ électrique dans la structure du dispositif CCD pendant l'exposition, celui-ci est soumis à une dégradation lentement progressive due au bombardement aux rayons X. Au niveau macroscopique, c'est le courant d'ombre qui augmente. Même si le dispositif CCD n'est pas exposé sur toute sa surface à la même densité de radiation(il y a toujours au centre un objet plus ou moins radio-opaque), après un nombre important d'expositions, une image quasi-constante engendrée par le courant d'obscurité du dispositif CCD lui-même sera additionnée à l'image utile. Cette empreinte du dispositif CCD peut être lue sans exposition à la lumière ou aux rayons X.

Une caractéristique essentielle de l'invention concerne l'élimination de l'effet de cette image résiduelle à chaque prise de vue. Après la numérisation, on procède à une correction cosmétique de l'image acquise en tenant compte, en outre, de l'empreinte du courant d'ombre disponible dans la mémoire numérique qui est actualisée à chaque démarrage du système numérique, en effectuant un cycle de lecture avec le dispositif CCD maintenu à l'ombre.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant deux modes de réalisation de l'invention, et dans lequels :
La figure 1 illustre un cycle d'acquisition d'images selon le procédé proposé par l'invention ;
La figure 2 montre, de façon schématique, un premier mode de réalisation d'un agencement d'acquisition d'images selon l'invention ;
La figure 3 illustre un deuxième mode de réalisation de l'invention,
La figure 4 est une vue de dessus schématique avec arnachement des deux dispositifs à transfert de charges de la figure 4 ;
La figure 5 est une vue schématique d'un dispositif à transfert de charges montrant un exemple permettant un effacement rapide selon la présente invention ;
La figure 6 est une vue à plus grande échelle d'un détail encerclé en VI sur la figure 5.

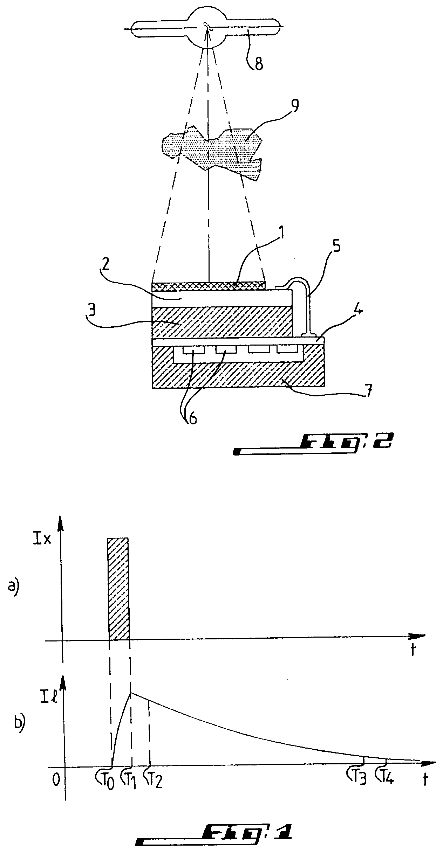

Sur la figure 1 qu'illustre un cycle d'acquisition d'image, on voit en a l'évolution dans le temps de l'intensité de la radiation X, appelée Ix, en corrélation avec l'intensité lumineuse émise par le scintillateur, appelée I1 et indiquée en b. Le scintillateur est un scintillateur ayant une forte rémanence, c'est-à-dire supérieure à 0,1 sec, de préférence de l'ordre de 0,5 à 0,9 sec, pour une baisse jusqu'au niveau de 10%. La radiation commence au moment t0 et dure jusqu'au moment t1. Pendant ce temps le dispositif CCD se troue exposé à un champ électrique minimal et le scintillateur est excité progressivement tout en émettant de la lumière. Le maximum d'intensité de lumière coïncide avec la fin de la radiation X, c'est-à-dire avec le moment t1. Entre les moments t1 et t2 s'écoule la période d'effacement rapide au cours de laquelle le dispositif CCD à transfert de charge est vidé des charges produites avant le moment t1 et par le changement essentiel de la polarisation vers l'état optimisé pour le travail en lumière. Le régime d'intégration commence au moment t2 et dure jusqu'à la relaxation essentielle du scintillateur, c'est-à-dire au moment t3, quand la quantité de lumière qui reste à émettre devient négligeable. Après t3, le dispositif CCD est vidé par la lecture de l'image acquise pendant l'intégration.

Sur cette figure, on constate qu'entre les moments t0 et t1, de la lumière est perdue. Pour réduire cette quantité, il faut réduire le temps d'exposition aux rayons X en augmentant inversement proportionnellement l'intensité de la radiation. Autrement dit, on établit la dose nécessaire à l'excitation du scintillateur, plutôt par augmentation de l'intensité des rayons X que par le temps d'exposition.

On voit aussi sur la figure 1 l'importance de la vitesse d'effacement concernant les pertes de lumière entre t1 et t2. La surface comprise entre la courbe de l'intensité de lumière et l'axe du temps, dans l'intervalle du temps t1-t2 d'une part, et d'autre part, dans l'intervalle du temps t3-t4 détermine une quantité de lumière qui donne un flou vertical de l'image lue sur le CCD. Ce flou vertical qui risque d'être visible, est réduit et en plus est retiré à l'occasion de la correction cosmétique de l'image conformément à la quatrième caractéristique du fonctionnement citée plus haut.

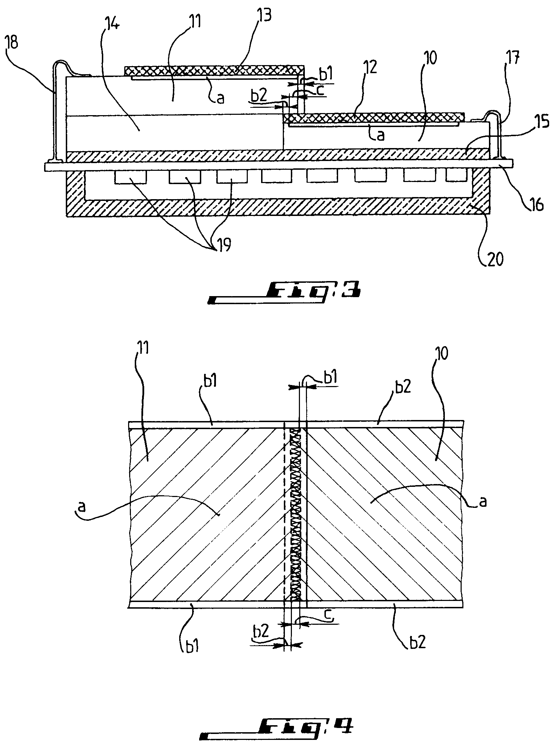

La figure 2 est une vue schématique de principe, en coupe , d'un agencement d'acquisition d'images par rayons X selon l'invention, qui utilise la post-luminescence d'un scintillateur et un dispositif à transfert de charge (CCD)2. Le scintillateur 1 est destiné à convertir les rayons X provenant du générateur 8 des rayons X qui contiennent l'image de l'objet 9 en signaux lumineux visibles. Le scintillateur 1 est posé directement sur la surface sensible à la lumière du dispositif CCD 2 ou sur un support à part et collé ensuite avec une colle optique sur la surface de ce dispositif CCD.

L'ensemble du scintillateur et du dispositif CCD est collé sur une plaque écran-support 3 réalisée en matière dure. Cette pièce est déterminante pour la tenue mécanique de l'ensemble. Pour arrêter les photons X qui n'ont pas été absorbés dans le scintillateur ou le silicium et réduire ainsi la dose de radiation X absorbée dans le sujet à radiographier, on choisit une matière qui est en plus absorbante de radiation. Il convient d'utiliser pour l'écran-support 3, par exemple, du tungstène légèrement allié, avec une épaisseur approximative de 0,5 mm, qui permet aussi de contacter électriquement le CCD par arrière.

L'écran-support 3 portant l'ensemble formé par le dispositif CCD 2 et le scintillateur 1 est collé sur la surface du support des circuits électriques 4. Celui-ci est double face (éventuellement multicouche) et à faible épaisseur, étant donné que la tenue mécanique est assurée par l'écran support 3. Le dispositif CCD est connecté au dispositif de circuits réalisé sur le support 4, à l'aide des fils conducteurs 5. La référence 6 désigne les composants du dispositif électronique nécessaire au fonctionnement du dispositif CCD. Les connexions du dispositif électronique du capteur à la chaîne électronique numérique de traitement des signaux image se font à l'aide d'un câble qui n'est pas représenté sur la figure 2.

L'ensemble des composants électroniques 6 est protégé contre la radiation directe traversant le dispositif CCD par l'écran-support 3 et contre la radiation diffusée par l'environnement, par un couvercle 7 réalisé en un matériau absorbant.

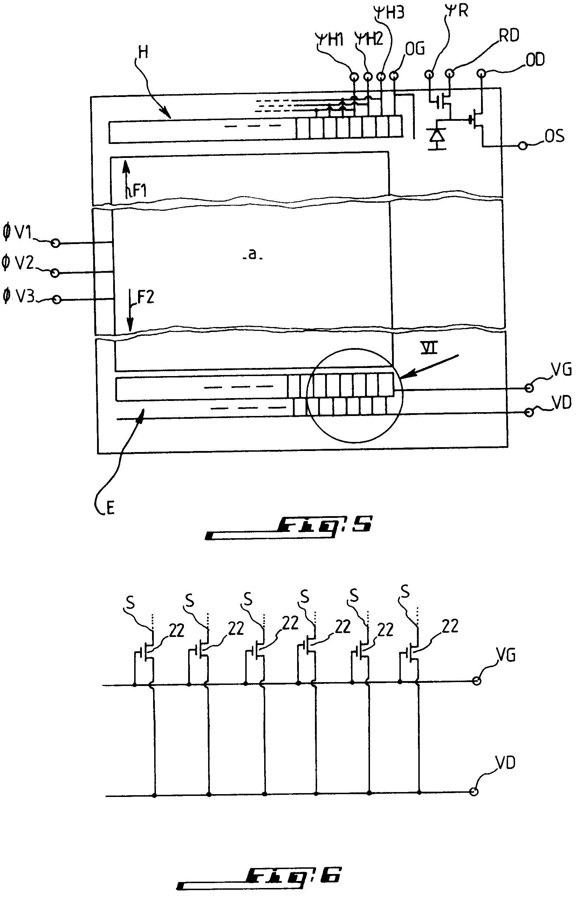

La figure 3 montre un deuxième mode de réalisation d'un capteur d'image par rayons X, selon l'invention, qui permet d'augmenter la surface sensible d'enregistrement d'image de l'agencement d'acquisition selon l'invention. Ce deuxième mode de réalisation comprend deux dispositifs à transfert de charge portant les références respectivement 10 et 11 qui sontjuxtaposées, en se chevauchant au niveau de leurs bords adjacents d'une manière spécifique, qui sera expliquée plus loin. Les dispositifs CCD 10 et 11 sont recouverts chacun d'un écran scintillateur respectivement 12 et 13. Un intercalaire 14 est disposé entre le dispositif CCD 11 et un écran-support 15 sur lequel est monté directement le dispositif CCD 10. La surface inférieure de l'écran-support 15 porte le support de circuit électrique 16 auquel sont reliés électriquement les dispositifs CCD 11 et 12 par des connexions illustrées en 17 et 18. Les composants électroniques du dispositif de circuits électriques sont indiqués en 19 et un couvercle 20 est prévu qui a les mêmes fonction et caractéristique que le couvercle selon la figure 2.

En se référant aux figures 3 et 4, on expliquera la raison du chevauchement partiel des dispositifs CCD 10 et 11. Comme il ressort notamment de la figure 4, un dispositif à transfert de charge comporte une zone sensible a qui est hachurée et, le long de ses bords, une zone morte indiquée en blanc. Si onjuxtaposait tout simplement les deux dispositifs CCD 10 et 11, l'image présenterait en son milieu une bande sensiblement verticale correspondant aux zones mortes latérales des deux dispositifs. Pour éviter cet effet, on dispose les deux dispositifs de façon qu'ils ne se chevauchent non seulement par leurs zones latérales mortes b1, b2 mais également par quelques colonnes de pixels de leur zone sensible a, en produisant ainsi une zone de chevauchement c dont la largeur est exagérée sur la figure pour faciliter la compréhension de l'invention. Cette dernière est prévue pour couvrir les tolérances de montage et s'assurer de ne pas manquer de pixels entre les deux images. Etant donné que l'absorption des rayons X dans l'ensemble formé par le scintillateur 13 et le dispositif CCD 11 est suffisamment faible, il reste de la radiation pour la région ombrée du dispositif CCD 10.

Le dispositif électronique et le système numérique qui sont associés au capteur selon la figure 3 ont ainsi à gérer pratiquement deux images avec une bande commune aux bords adjacents de celles-ci. L'image d'ensemble est reconstituée après avoir numérisé les deux images individuelles et effectué un traitement spécifique au cours duquel on corrige par multiplication par un coefficient prédéterminé le contenu d'informations de la zone b1 du dispositif CCD10 tandis que les informations de la zone c sont éliminées, la zone b2 ne contenant de toute manière aucune information, puisqu'il s'agit d'une zone morte. Cette correction se fait par le logiciel dans le cadre d'un traitement cosmétique de l'image et le coefficient de multiplication ainsi que les paramètres nécessaires à cette opération peuvent être déterminés une fois pour toute à la fabrication, par étalonnage, et enregistrés dans la mémoire du dispositif informatique. Mais on pourrait également déterminer ces paramètres dynamiquement, à l'occasion de chaque prise de vue en déterminant l'ombre du dispositif CCD 11 dans l'image en provenance du dispositif CCD 10. Cette deuxième méthode est plus précise, car elle élimine le décalage possible entre les deux moitiés d'image, qui pourrait être due à une modification de l'angle d'incidence des rayons X sur le capteur. L'impact de l'angle d'incidence pourrait par ailleurs être négligé en utilisant un ensemble scintillateur-dispositif CCD suffisamment mince de façon que les zones b et c sur la figure 4 ne varient pratiquement pas en fonction d'une modification de l'angle d'incidence.

En se reportant aux figures 5 et 6, on décrira une méthode permettant une effacement rapide d'un dispositif à transfert de charges, dans le but de réduire la période t1-t2 sur la figure 1. La figure 5 donne le schéma électrique d'un dispositif à transfert de charges. La partie supérieure de ce schéma est connue. La référence H désigne le registre de sortie des informations stockées dans les pixels de la zone sensible c du dispositif à transfert de charges. En commandant de façon appropriée les potentiels φ V1, φ V2 et φ V3, de façon connue en soi, on déplace pas-à-pas les rangées des pixels vers le haut en direction de la flèche F1 pour qu'ils parviennent successivement dans le registre de sortie H. Les informations ainsi inscrites dans le registre sont ensuite sorties de celui-ci, de façon pas-à-pas en commandant de façon appropriée les potentiels indiqués. Sur cette figure ΨH1, ΨH2, ΨH3 désignent des potentiels de phase horizontale, OG la grille de registre de sortie, ΨR et RD la grille et le drain du transistor de remise à zéro, OD et OS le drain et la source du transistor de sortie.

La mesure qui est utilisée par l'invention concerne l'effacement rapide des charges dans le dispositif à transfert de charges. A cette fin, on change la relation de phase entre les potentiels φ V1, φ V2 et φ V3 de façon à déplacer les rangées des pixels vers le bas, en direction de la flèche F2 de façon à introduire les rangées dans un registre d'effaçage E qui est formé, dans l'exemple représenté, par une rangée de transistors-commutateurs 22 du type MOS. Le nombre des transistors est égal au nombre des colonnes du dispositif à transfert de charge. La rangée de transistors-commutateurs est parallèle au registre de sortie, mais située à l'autre extrémité des colonnes. Les drains des transistors sont montés en parallèle et reliés à la borne de référence de remise à zéro du dispositif portant la référence VD. Les sources S des transistors sont reliées chacune à l'extrémité d'une colonne comme cela est indiqué sur la figure 6 par des points. Les électrodes de commande sont montées en parallèle et reliées à une électrode de commande externe désignée par VG.

Pendant l'intégration ou la lecture du dispositif à transfert de charges, les électrodes de commande ou grilles des transistors sont polarisées pour assurer le blocage de ceux-ci. Pour obtenir l'effacement rapide, on commande les grilles de façon que les transistors-commutateurs 22 deviennent conducteurs simultanément. Ainsi on efface le dispositif de transfert à charge par simple déplacement vertical vers le bas rangée par rangée, sans être obligé d'effectuer le déplacement horizontal comme dans un cycle de lecture. Ceci permet d'accélérer des dizaines de fois, voire des centaines de fois l'effacement du dispositif CCD.

Il va de soi que de multiples modifications peuvent être apportées à l'invention telle que représentée sur les figures. Par exemple le nombre de dispositifs à transfert de charges pourrait être supérieur à deux et choisi en fonction de l'importance de la surface d'image souhaitée, à condition de prévoir le chevauchement mutuel des bords adjacents des différents dispositifs, tel que décrit plus haut en se référant aux figures 3 et 4.

## Revendications

1. Procédé d'acquisition d'images par rayons X, selon lequel on expose l'objet à visualiser à des rayons X et produit à partir de ces rayons, à l'aide d'un écran scintillateur et d'un dispositif à transfert de charges des signaux électriques représentatifs de l'objet, caractérisé en ce que l'on utilise un écran scintillateur (1) à forte rémanence, l'on place l'écran scintillateur (1) sur la surface sensible à la lumière du dispositif à transfert de charges (2) et amène ce dernier à acquérir l'image visible du scintillateur par intégration pendant la phase de post-luminescence du scintillateur.

2. Procédé selon la revendication 1, caractérisé en ce que l'on utilise une source (8) émettrice de rayons X dont l'énergie est suffisamment élevée pour que le dispositif à transfert de charges (2) fonctionne avec un coefficient d'absorption des photons X relativement faible, dans le but d'éviter la détérioration de ce dispositif.

3. Procédé selon la revendication 2, caractérisé en ce que l'on maintient le champ électrique auquel le dispositif à transfert de charges (2) est exposé pendant la phase de radiation à une valeur minimale.

4. Procédé selon l'une des revendications précédentes, caractérisé en ce que la phase d'effacement du dispositif à transfert de charges, qui précède la phase d'intégration, est effectuée très rapidement.

5. Procédé selon la revendication 4, caractérisé en ce qu'un cycle d'acquisition d'une image comprend successivement les phases de l'exposition du scintillateur aux rayons X, d'un effacement rapide du dispositif à transfert de charges, de l'intégration et de lecture.

6. Procédé selon l'une des revendications précédentes, caractérisé en ce que chaque image acquise est corrigée par soustraction de l'image empreinte du bruit du dispositif à transfert de charges, qui est obtenu par un cycle de lecture du dispositif à transfert de charges sans radiation.

7. Agencement d'acquisition d'images pour la mise en oeuvre du procédé selon l'une des revendications 1 à 6, caractérisé en ce qu'il comprend au moins un écran scintillateur (1; 12, 13) à forte rémanence qui est monté sur la face sensible d'au moins un dispositif à transfert de charges (2 ;10, 11) et en ce que le dispositif de commande de ce dernier est adapté pour que l'intégration des images sur le dispositif à transfert de charges soit effectuée pendant la phase de post-luminescence de l'écran scintillateur.

8. Agencement d'acquisition selon la revendication 7, caractérisé en ce qu'il comprend plusieurs dispositifs à transfert de charges (10, 11) couverts chacun d'un scintillateur (12, 13) et en ce que les zones latérales adjacentes de deux dispositifs à transfert de charges se chevauchent pour éviter l'apparition de bandes vides dans l'image.

9. Agencement d'acquisition selon l'une des revendications 7 ou 8, caractérisé en ce qu'il comprend un écran support (3, 15) réalisé en un matériau dur et/ou absorbant des rayons X et constituant le support du ou des dispositifs à transfert de charges (2;10, 11) recouverts d'écrans scintillateurs (1; 12, 13).

10. Agencement d'acquisition selon l'une des revendications 7 à 9, caractérisé en ce qu'il comprend un support de circuits électriques (4) et des composants électroniques (16) nécessaires au fonctionnement du ou des dispositifs à transfert de charges.

11. Agencement d'acquisition selon l'une des revendications 7 à 10, caractérisé en ce qu'il comprend un couvercle (7, 20) de protection des composants (6, 16) contre des radiations X diffusées par l'environnement, ce couvercle étant réalisé en un matériau absorbant des rayons X.

12. Agencement d'acquisition selon l'une des revendications 8 à 11, caractérisé en ce qu'il comprend un dispositif numérique d'assemblage dans une seule image des images individuelles obtenues par chaque dispositif à transfert de charges (10, 11).
